# EUROPEAN PATENT APPLICATION

(11) **EP 2 418 636 A1**
(43) Date of publication of application: **15.02.2012**
(21) Application number: 10761681.5
(22) Date of filing: 06.04.2010
(51) Int. Cl.: G09B 23/34, B29C 67/00, B65D 51/24

(54) **HEAD MODEL FOR BRAIN-IMAGING DEVICE AND TECHNIQUE FOR PRODUCING SAME**

(30) Priority: 10.04.2009 JP 2009096188
(71) Applicant: National Cerebral and Cardiovascular Center, Suita-shi Osaka 565-8565 (JP); Nihon Medi-Physics Co., Ltd., Tokyo 136-0075 (JP)
(72) Inventor: IIDA, Hidehiro, Suita-shi Osaka 675-0103 (JP); NAKAZAWA, Mayumi, Tokyo 136-0075 (JP); IMABAYASHI, Etsuko, Iruma-gun Saitama 350-0451 (JP); ISHIDA, Kenji, Suita-shi Osaka 564-0076 (JP)
(74) Representative: van Walstijn, Bartholomeus G. G.
(86) International application number: PCT/JP2010/056196
(87) International publication number: WO 2010/116982

(57) **Abstract**

A head model according to one example of an embodiment is a head model that may be provided for use in the calibration for a brain-imaging device, where a part corresponding to the skull and a part corresponding to at least one specific region of the brain are each formed by a continuous cavity with no cuts other than an opening for liquid injection.

## Description

### [Technological Field]

The present invention is related to a head model that may be used for applications such as verification or adjustment for brain-imaging technologies such as PET or SPECT, and to technology for manufacturing the same.

### [Background Art]

Brain imaging is widely performed using various techniques in order to diagnose brain diseases or to study brain functions. PET (Positron Emission Tomography) or SPECT (Single Photon Emission Computed Tomography) is one example of such brain-imaging techniques. In these methods, photons (gamma rays) that are directly or indirectly generated from a radioactive drug injected into the body are detected by multiple gamma-ray detectors arranged around the head, and a brain image is formed by imaging the distribution of those photons using a computer. PET and SPECT are suitable techniques for imaging information on physiological function, such as neurotransmitter receptor distribution, glucose consumption, local blood flow, vascular reactivity and oxygen consumption, etc.

However, with PET and SPECT, there are errors based on two causes of physical errors (photon absorption and Compton scattering). Therefore, the functional images that are formed contain varying degrees of errors. So when performing an image diagnosis using PET or SPECT, it is desirable to perform verification in advance to obtain accurate results. Based on such considerations, PET and SPECT images and values obtained therefrom are verified in advance by using images obtained using subjects whose actual values are already known. For these subjects whose values are already known, human phantoms corresponding to the tissue being measured have conventionally been used.

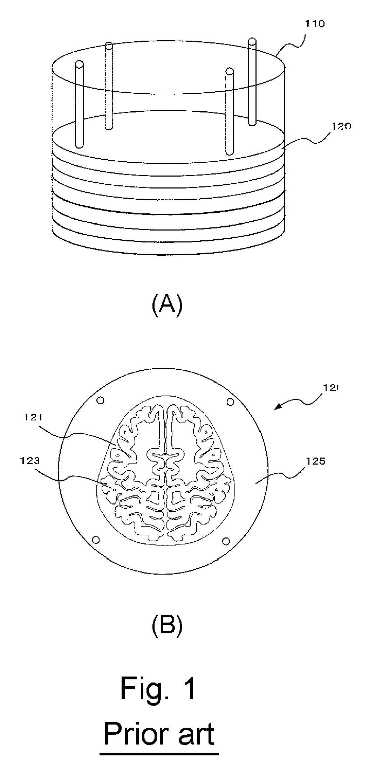

As an example of a head model produced according to prior art that has been used for such purposes, the Hoffman 3D Phantom produced by Data Spectrum (USA) is shown in Fig. 1A and Fig. 1B. This head model is assembled by layering cross-sectional slice members 120, 120..., each having a cavity 123, on a columnar container 110. Then, a liquid containing a radioactive drug is injected into the columnar container 110, and the gamma rays are measured while the cavity 123 is filled with the liquid. Because gamma rays are radiated only from cavity parts where the radioactive drug is present and are not radiated from parts of the slice members, it is possible to obtain a tomographic image based on these differences.

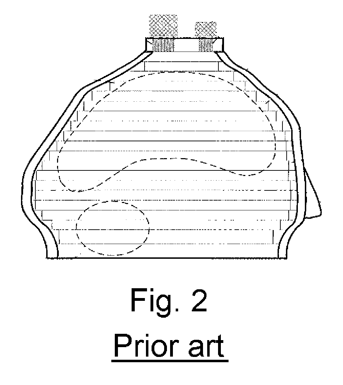

As another example of a conventional head model, the head model disclosed in Japanese published unexamined application 2008-132021 is shown in Fig. 2. This head model is characterized by making the shape of the container 110 of the head model of Fig. 1 into a shape resembling a skull. Compared to the head model of Fig. 1, the head model of Fig. 2 is better in that it allows for imaging to be performed while taking into consideration the effects of radiation absorption, etc. by the skull.

### [Prior Art Documents]

### [Patent Documents]

[Patent Document 1] Japanese published unexamined application 2008-132021

### [Summary of the Invention]

As described above, various head models have heretofore been proposed and used for actual verification. However, because the head model of Fig. 1 has a form in which sheet-like members resembling slices are contained in a columnar container, it is not possible to perform verification that takes into consideration the actual shape of the head or the effects of bones. On the other hand, with the head model of Fig. 2, it is possible to take into consideration the effects of bones. However, because it is clearly impossible to change retroactively the material or thickness of the part corresponding to the skull, it is not possible to perform verification for a hypothetical case in which the skull has no effect, or to perform measurements while changing the absorption coefficient, etc. of the skull.

Moreover, a serious problem with conventional head models is that, because the head models are formed as multiple slices as shown in Fig. 1 and Fig. 2, it is easy for air to become trapped between slices, and it is not easy to remove air that has become trapped. Because air has different y-ray absorption characteristics from the other tissue, it becomes a significant cause of errors in the obtained images. Consequently, when preparing a conventional head model, it is necessary to perform adjustments to prevent air from remaining in the head model, and this usually requires great amounts of skill and time. This is particularly problematic for models used for verifying nuclear medicine images. Specifically, because the radioactive tracers used in nuclear medicine contain radioactive isotopes, if the preparation of the model takes time, this leads to the problem that the operator is exposed to more radiation. Moreover, because the radioactive isotopes used in nuclear medicine have very short half-lives, if preparatory work is prolonged, the tracer decays further and it may not be possible to obtain a sufficient level of signals during actual measurement. Consequently, the time spent on preparation should preferably be as short as possible.

Moreover, even with long hours of skilled work, it remains difficult to completely eliminate the air between the slices, and it is very difficult to obtain clean data with little noise.

The present invention has been devised with these considerations in mind, and the objective is to provide a head model that allows for the absorption coefficient of the skull to be flexibly changed and that is easy to produce.

The present invention may, for example, be embodied as a head model that may be provided for use in verification for brain imaging, where a part corresponding to the skull and a part corresponding to at least one specific region of the brain are each formed by a continuous cavity with no cuts other than an opening for liquid injection. In this head model, at least one part of the structure surrounding said cavity is composed of a material with a linear absorption coefficient equivalent to that of human soft tissue.

In other words, the present invention may be realized as a head model that may be provided for use in verification for brain imaging, comprising: a first-part for containing liquid that is provided on a part corresponding to the skull, and has a hollow structure with no discontinuous parts other than an opening for liquid injection; a second-part for containing liquid that is provided on a part corresponding to a specific region of the brain, and has a continuous hollow structure with no cuts other than an opening for liquid injection; and a structure formed as a single body so that said first and second-part for containing liquids are present therein. This structure should be formed using a material having a linear absorption coefficient equivalent to that of human soft tissue. Such a material may be selected for use from among materials having a density equivalent to that of human soft tissue, and favorable examples include acryl or ABS resin, etc.

The cavity for the part corresponding to the skull is used to include a liquid resembling bone. Then, by appropriately adjusting the type and density of the liquid, it is possible to change the γ-ray absorption coefficient arbitrarily in the skull part. In this way, not only is it possible to perform verification while taking into consideration the effects of the bone, it also becomes possible to perform verification in various states depending on the needs of the user, such as verification in states resembling bones in various states, or verification in states in which the effects of the bone are deliberately not taken into consideration.

Furthermore, by selecting transparent materials for the structure and the liquid being filled, it becomes possible to observe the inside of the phantom, it is easy to confirm whether air has entered the phantom, and, furthermore, if air has entered, it is easy to remove that air. This is a highly excellent property that has not been available in head phantoms that have been proposed in the past.

Moreover, in the head model described above, the part corresponding to the skull and the part corresponding to at least one specific region of the brain are each formed as a single hollow structure with no cuts, no discontinuous parts other than an opening for liquid injection. In other words, unlike conventional head models, the brain region is not segmented by a sliced structure, and is not discontinuous. Due to these characteristics, the problem seen in the prior art of air remaining between the slices does not occur in principle according to the head model described above. Because the cavity is a continuous structure with no cuts, even if air enters a minute structure of the brain, the air can be easily guided to the liquid-injection hole and discharged by appropriately rotating the model. In this way, according to the head model of the present invention, operations for discharging air remaining from the injection of test solution is made significantly easier compared to previous models. Consequently, it becomes possible to prepare a good model with no air remaining inside in a short period. Moreover, it becomes possible to reduce the amount of irradiation to which operators are exposed.

Consequently, the head model according to the present invention provides very excellent advantages, such as the possibility of easier preparation compared to the use of conventional head models, and the fact that more accurate verification can be performed easily.

The head model described above according to the present invention may be manufactured using, for example, stereolithography. From this perspective, the present invention may be embodied as a method for producing, for example, a head model that may be provided for use in verification for brain imaging, comprising forming, based on morphological images such as MRI images of the human head, three-dimensional CAD data representing at least each of the skull and a specific region of the brain as a hollow structure with no discontinuous parts other than an opening for liquid injection; and hardening, based on the formed three-dimensional CAD data, photo-curable resin through stereolithography.

Moreover, the present invention may, for example, be embodied as three-dimensional CAD data that, by being input into a stereolithography machine, enables a stereolithography machine to mold a head model that may be provided for use in verification for brain imaging, where the three-dimensional CAD data represent, in the head model, a part corresponding to the skull and a part corresponding to at least one specific region of the brain, respectively, as hollow structures with no discontinuous parts other than an opening for liquid injection.

Other characteristic structures and advantages included within the scope of the present invention are articulated by the following detailed descriptions and attached drawings.

### [Brief Description of the Drawings]

**Fig. 1** shows an example of a head model according to the prior art.
**Fig. 2** shows another example of a head model according to the prior art.
**Fig. 3A** shows an example of the head model according to the present invention (frontal perspective view).
**Fig. 3B** shows an example of the head model according to the present invention (rear perspective view).
**Fig. 3C** shows an example of the head model according to the present invention (transparent perspective view).
**Fig. 4A** shows an example of the head model according to the present invention (sagittal view).
**Fig. 4B** shows an example of a liquid-injection hole structure that may be loaded on the head model according to the present invention.
**Fig. 5** shows an embodiment in which two cavities resembling the brain region are provided.
**Fig. 6** shows an embodiment in which a columnar structure is provided in a cavity resembling the brain region.
**Fig. 7** shows an embodiment in which a reticular structure is provided in a cavity resembling the brain region.
**Fig. 8** shows a flowchart for explaining an example of a method for producing the head model according to the present invention.
**Fig. 9** shows part of an MRI morphological image used in an actual prepared example of the head model according to the present invention.
**Fig. 10** shows a modeled version of the MRI image of Fig. 9.
**Fig. 11** is a sagittal view of the modeled data of Fig. 10 reconfigured from cross-sectional data.
**Fig. 12A** is a CT image of a head model 300, and Fig. 12B is a SPECT image of the head model 300.
**Fig. 13** is an illustration for explaining an example of a spigot that may be used to seal a liquid-injection hole of a cavity resembling the skull or a brain region in the head model according to the present invention.
**Fig. 14** is an illustration for explaining another example of a spigot that may be used to seal a liquid-injection hole of a cavity resembling the skull or a brain region in the head model according to the present invention.
**Fig. 15** is an illustration for explaining yet another example of a spigot that may be used to seal a liquid-injection hole of a cavity resembling the skull or a brain region in the head model according to the present invention.

### [Detailed Description of Preferred Embodiments]

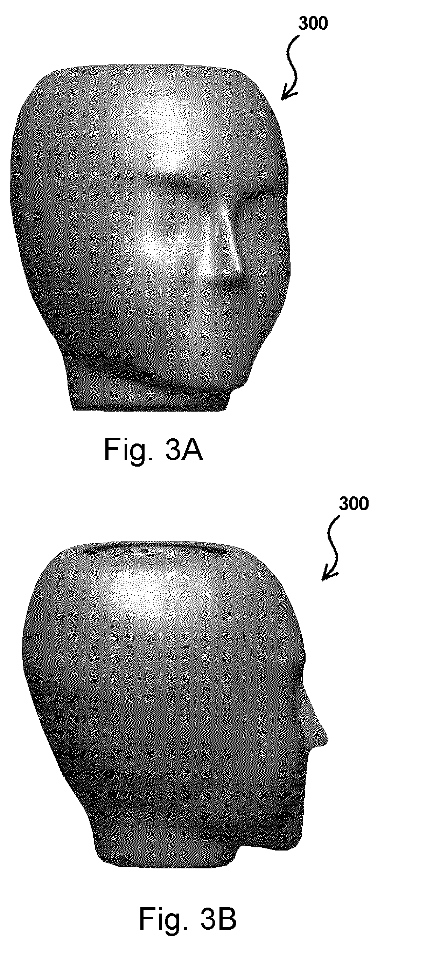

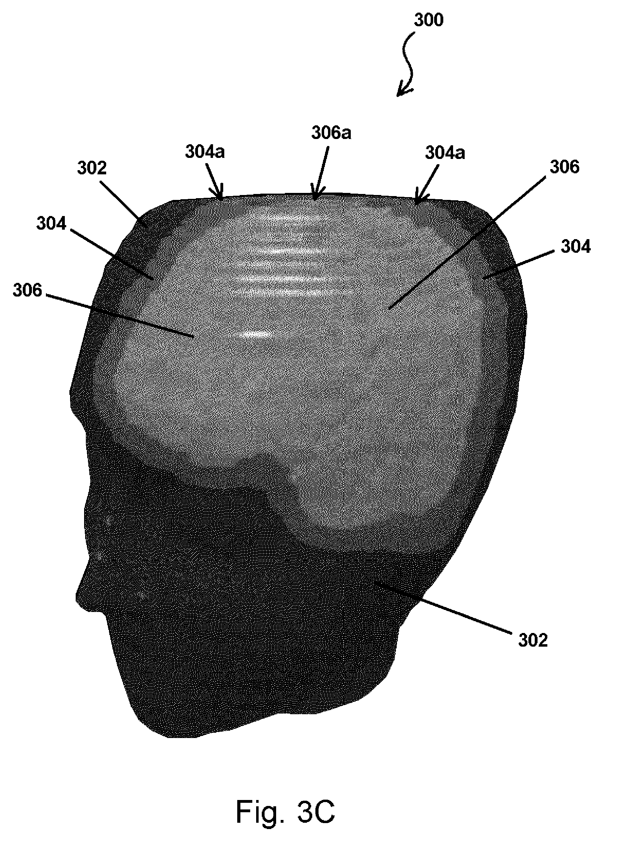

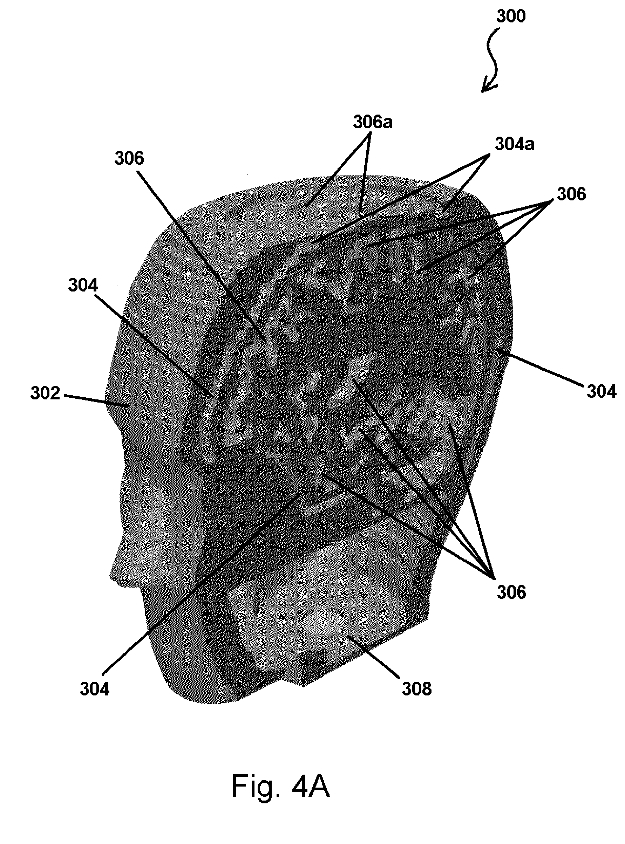

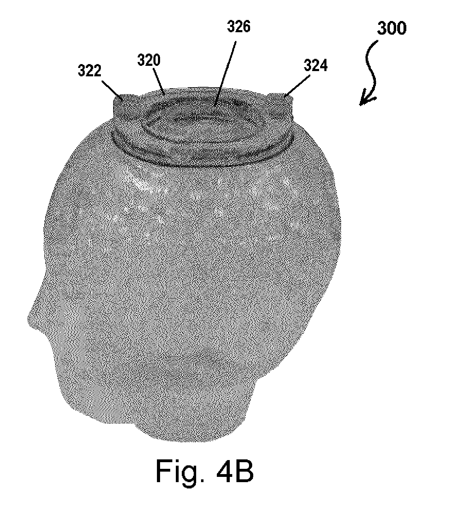

Figs. 3A to 3C and Figs. 4A and 4B are images for explaining one embodiment of the head model according to the present invention. Fig. 3A and Fig. 3B are perspective views of a head model 300 according to the present embodiment, viewed from the front and the rear, respectively, and Fig. 3C shows the same head model 300 in a transparent perspective view. Fig. 4A shows the head model 300 in a cross-sectional view (sagittal view). The head model 300 has a structure in which a cavity 304 resembling the shape of the skull and a cavity 306 resembling a specific region of the brain are formed inside a solid structure 302.

The structure 302 may be composed of, for example, acryl or ABS resin. The external appearance of the structure 302 is arbitrary, but as shown in Fig. 3A and Fig. 3C, it is preferably a shape resembling the outer surface shape of a human head, such as the shapes near the eyes and nose. Moreover, to make the measurements closer to measurements of an actual human, the material used for the structure 302 should be the one which has an absorption coefficient equivalent to that of human soft tissue.

In the head model 300, the cavities 304 and 306 are provided with openings 304a and 306a respectively for injecting liquid at their respective upper parts. But except these openings, the cavities 304 and 306 are each formed as continuous, single cavities. In other words, unlike the brain regions of the conventional head models shown in Fig. 1 and Fig. 2, the cavities 304 and 306 are not sliced into several elements. They are formed as integrated cavities with no cuts. Consequently, the problems seen in the head models exemplified in Fig. 1 and Fig. 2 cannot occur, that is, the problems in which air is trapped inside the gaps between individual slices that distribute drug solution and it is very difficult to remove that air.

In the cross-sectional view of Fig. 4A, the cavities 304 and 306 appear to be divided into several sub-regions, but this is because the image is a cross-sectional view. The cavities 304 and 306 are each formed as completely three-dimensionally continuous cavities.

And at the same time, the cavity 304 and the cavity 306 are each independent cavities and are not mutually connected. Consequently, in principle, it is not possible for liquid that has filled the cavity 304 to be transferred to the cavity 306, or vice versa.

In the present embodiment, the shape of the cavity 304 resembles the shape of the part of the skull which houses the cerebrum and the cerebellum. This is because the purpose of use of the head model 300 is the verification of head PET images and head SPECT images, and it is sufficient as long as the effects of the skull on brain imaging performed by these devices can be examined. However, depending on the embodiment, the cavity 306 may of course be formed as a cavity resembling more skull structures.

In the present embodiment, the opening 304a for injecting liquid into the cavity 304 is provided in a circular shape on the crown of the head, and it is intended that the cavity 304 is to be sealed by inserting an appropriate cover therein. The state of the opening 304a would likely be easier to understand by looking at Fig. 4A. However, the position and shape of the opening are arbitrary, and the scope of embodiments of the present invention is not limited by these factors.

Fig. 4B shows an example of the above cover that may be loaded on the opening 304a. The cover 320 has a circular structure that can completely cover the opening 304a, and also has two liquid-injection holes 322, 324. The reason for providing two liquid-injection holes is that one is used as an air-discharge hole during liquid injection. The liquid-injection holes 322, 324 are connected to only the cavity part (cavity 304) resembling the bone via the interior space of the cover 320, and are not connected to the cavity part resembling the brain region.

By filling the cavity 304 with a liquid having an appropriate absorption coefficient, it is possible to simulate the effects of the bone during brain imaging. Examples of such a liquid include K₂HP0₄ solution. By changing the concentration of K₂HP0₄ of the solution, it is possible to arbitrarily change the absorption coefficient and perform imaging. For this reason, it becomes possible to minutely examine the effects of bones of various states on imaging. For example, it is known that bone density undergoes various changes based on age and gender. Therefore, by filling a K₂HP0₄ solution having an absorption coefficient corresponding to the age or gender of an expected subject, it becomes possible to perform more accurate verification.

Moreover, because the K₂HP0₄ solution is a transparent liquid, if a transparent material is used for the material of the head model, it is possible to visually confirm the inside of the head model. In this way, it is possible to easily visually confirm that the cavities 304, 306 are completely filled with liquid (i.e., that there is no air to impede measurement within the cavities). Furthermore, by filling the cavity 304 with a liquid having an absorption coefficient equivalent to that of soft tissue (e.g., water), it is also possible to simulate cases in which the effects of the bones are not taken into consideration.

In the above example, K₂HPO₄ solution was used as an example of the liquid resembling the bone, but the embodiments of the present invention are not limited to this. It is possible to appropriately select a suitable liquid that can reproduce absorption characteristics similar to those of bone and use it in a similar manner as described above.

Furthermore, depending on the purpose of use, after the absorption coefficient of the liquid filled in the cavity 304 has once been determined, the frequency at which this liquid is replaced is likely to be low. In such a case, vendors of the head model 300 may be able to sell products in which the cavity 304 has been filled with a liquid resembling the bone.

In the present embodiment, the shape of the cavity 306 has a shape resembling the gray-matter area of the brain. Consequently, by filling the cavity 306 with an appropriate radioactive drug, it is possible to reproduce a PET or SPECT image in which the drug is distributed mainly in the gray-matter area. Of course, the shape of the cavity 306 is not limited to that of the gray-matter area, and the cavity 306 may be formed as a cavity resembling the shapes of various areas depending on the objective. In addition to gray matter, examples of such areas include white matter, the cerebral neocortex, the cerebral paleocortex, the cerebrum, the midbrain, the cerebellum, the diencephalon, the nucleus basalis, the hippocampus, the cingulate gyrus, the frontal lobe, the parietal lobe, the temporal lobe, the occipital lobe, and sections of the brain atlas such as Brodmann areas, and such areas are appropriately selected according to the purpose of use of the head model.

In Fig. 4A, the symbol "306a" represents an opening for injecting liquid into the cavity 306. In the present embodiment, the opening 306a is provided on the crown of the head, but as with the opening 304a for the cavity 304, the position, shape and number of the opening 306a are arbitrary, and the scope of embodiments of the present invention is not limited by these factors. The opening 306a is not at all connected to the cavity 304, and it is not possible to inject liquid into the cavity 304 via the opening 306a. Similarly, the opening 304a is not at all connected to the cavity 306, and is configured so that liquid cannot be injected into the cavity 306 via the opening 304a.

Fig. 4B shows a spigot 326, which is an example of a structure for block the opening 306a. The spigot 326 is configured to seal the cavity 306 completely by closing it.

In the example shown in Fig. 4A, a hole 308 is provided on the lower part of the head model 300, but this has been formed to be used for the purposes such as for being attached to a stand, etc. Therefore, this hole is nothing more than an optional component in the implementation of the present invention.

As described above, the cavities 304 and 306 are formed as three-dimensionally continuous cavities with no cuts other than a liquid-injection hole. Consequently, even if air remains within the cavity during the injection of liquid, the remaining air can be easily guided toward the liquid-injection hole by appropriately rotating the head model 300. After guiding the remaining air to the liquid-injection hole, the remaining air can be easily discharged by opening the spigot of the liquid-injection hole and adding an amount of liquid equivalent to the remaining air. By repeating this operation several times, it is possible to discharge almost all of the air remaining from liquid injection. In the cases of the conventional models of Fig. 1 and Fig. 2, because they are structured to disperse the drug solution within the slice gaps, not only did air remain between the slices during the injection of liquid, it is extremely difficult to eliminate the remaining air. This remaining air significantly damages the quality of the brain images. However, as is apparent from the head model 300, the head model according to the present invention does not have a structure in which the drug solution is dispersed between the slices. For this reason, the above problems seen in the prior art do not occur in principle in the head model according to the present invention, and it is possible to easily prepare a good head model.

As described above, in the head model 300, in order to make it easy to visually confirm the remaining air when filling in the liquid, the structure 302 is preferably made with a transparent material.

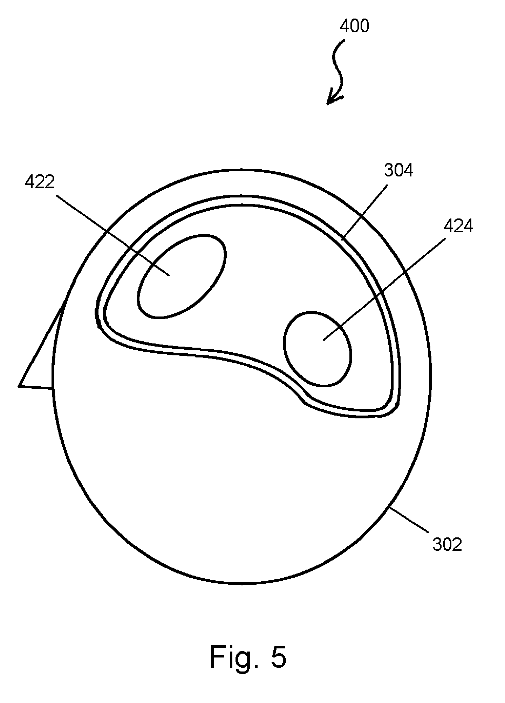

In the above head model 300, which is an embodiment, only one cavity resembling the gray matter is provided as the cavity resembling the brain region, but the embodiments of the present invention are not limited to this. Any number of cavities resembling the brain region may be provided. For example, an embodiment may be given a structure that is selected according to the type of functional image being verified using the head model, and resembles a shape formed by combining multiple regions. As an example, Fig. 5 shows an embodiment in which two cavities resembling the brain region have been provided.

As in the head model 300 described above, the head model 400 that is the embodiment shown in Fig. 5 has the cavity 304 resembling the shape of the skull inside the solid structure 302. It should be noted that in Fig. 5, components identical to those in the head model 300 have been given the same numeric symbols and indicated as such. The head model 400 differs from the head model 300 in that, although the head model 300 is provided with one cavity 306 as a hollow structure resembling the brain region, the head model 400 is provided with two cavities 422, 424. The cavities 422, 424 may be mutually connected as a single structure, or may each be independent structures that are not mutually connected. If they are each independent structures, it is necessary for each to have an independent liquid-injection hole. But if they are mutually connected as a single structure, they may have a common liquid-injection hole. In Fig. 5, the cavity 422 and the cavity 424 are shown in a very schematic manner as cavities resembling the shape of the frontal lobe and the shape of the cerebellum, respectively, but of course, these are nothing more than examples. Depending on the objective, the head model may be provided with various numbers of independent cavities in various sections.

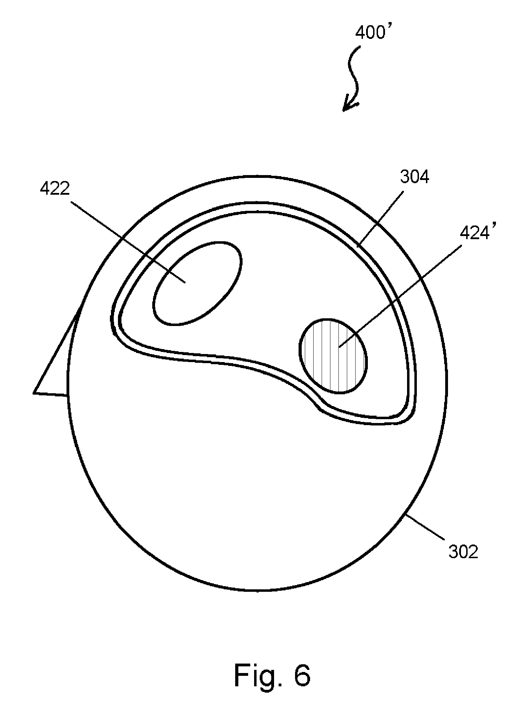

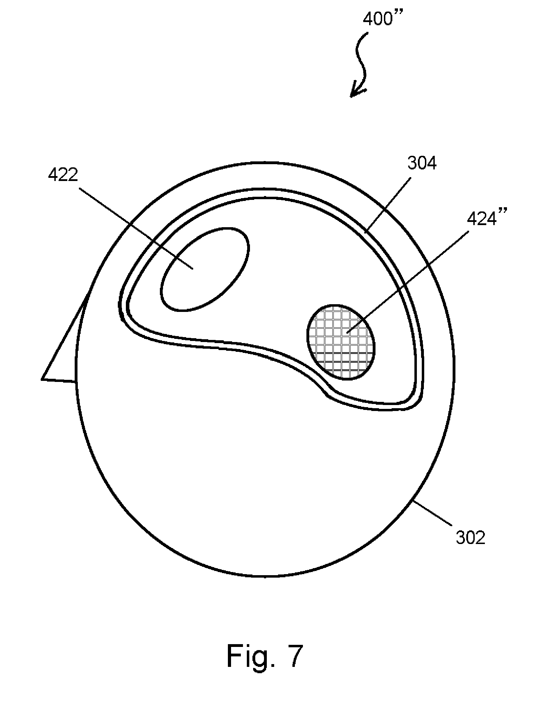

In order to adjust the quantity of the drug distributing in each region, a columnar or reticular structure may be provided in the cavities. Such embodiments are shown in Fig. 6 and Fig. 7. The head model 400' shown in Fig. 6 is a modified example of the head model 400 of Fig. 5, and is an example in which the second cavity 424 (indicated as cavity 424') resembling the brain region is provided with a columnar structure extending in the axial direction. This type of columnar structure changes the relative proportions of the drug distributed within the cavity. In actual clinical cases, it has been known that the drug distribution rates are different depending on the different regions. It becomes possible to perform more accurate verification by providing a columnar or reticular structure inside the cavities to variously change the respective porosities of each region and to reproduce the typical drug distribution rates of clinical cases. Porosity adjustment may be performed by providing a columnar or reticular structure as described above in the cavity areas corresponding to specific regions. But each component of the columnar and reticular bodies used here shall have a diameter that is around 1/3 to 1/4 or less of the spatial resolution.

The following example outlines the porosity of each region in this example, together with the type of brain function image being verified.
(A) If the functional image being verified is a SPECT image of cerebral blood flow:
   Gray matter : Striatum : White matter = 4:4:1 1
(B) In cases of dopamine transporter imaging
   Gray matter : White matter : Striatum : Cerebellum = 1 : 1 : 10 : 1

Moreover, it is also possible to arrange the above columnar body with an arbitrary density at the region where an involved area is expected to be, and prepare an arbitrary disease model.

Fig. 7 shows an embodiment 400" in which the cavity 424 of the head model 400 of Fig. 5 has been made the cavity 424" provided with a reticular structure for similar reasons.

It should be noted that if a columnar structure is provided in a cavity, it is preferable to face the direction of the columns in a substantively axial direction as shown in Fig. 6.

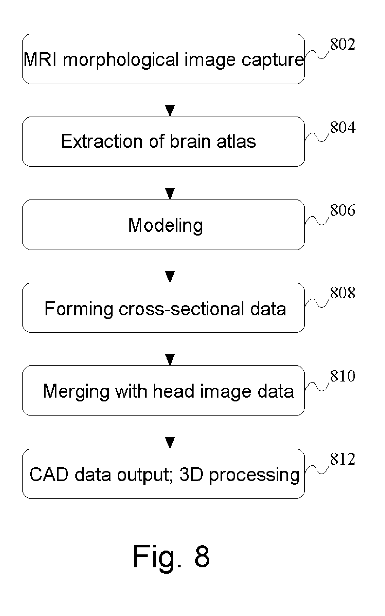

Fig. 8 shows a flowchart describing each step for manufacturing the head model described above. The head model according to the present invention may be prepared by performing a heretofore known stereolithography technique by using CAD data prepared based on a morphological image such as MRI.

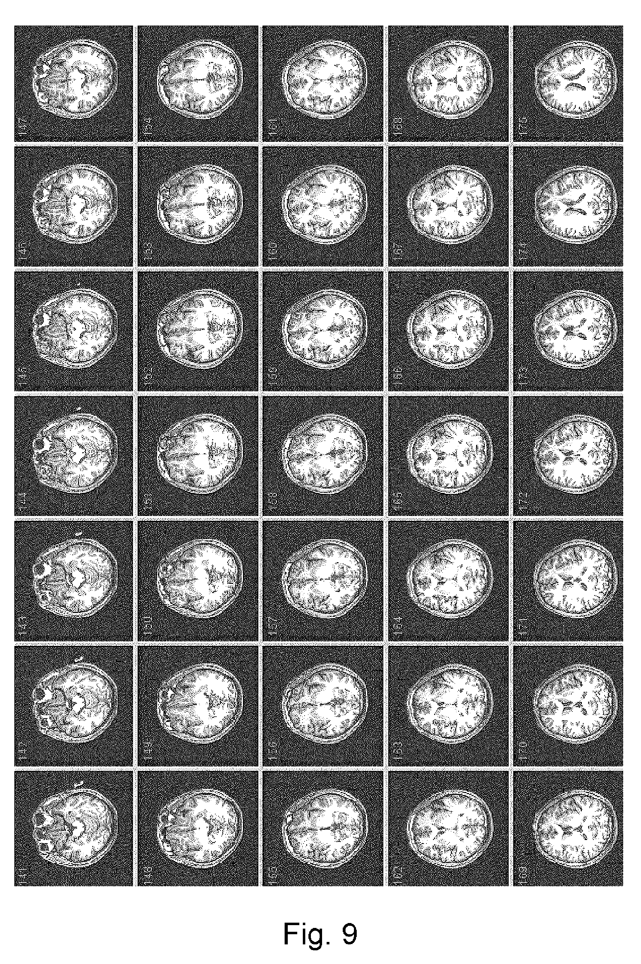

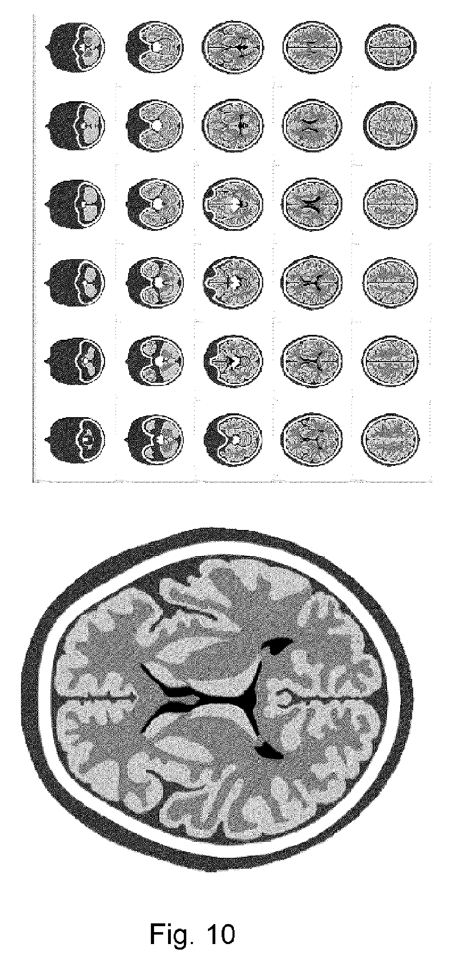

In this example, first, a morphological image of an actual human, such as a head MRI, is obtained, and multiple continuous cross-sectional images are obtained (step 802). The photographs of Fig. 9 show some MRI images used in an actual prepared case. For each tomographic image, an operation to extract the brain atlas is performed (step 804), and modeling is performed for the cranium, the gray matter of the brain, the white matter of the brain, bones, spinal fluid and other structures (step 806). A modeled head structure images are shown in Fig. 10. In this example, the continuity of the internal structure during three-dimensional processing as well as the symmetry of the shape have been considered, and the gray-matter structure and the white-matter structure are regarded as almost equivalent in volume. As shown in Fig. 10, the gray matter, the white matter and the skull of the modeled head are relatively symmetrical, but have a natural head shape with natural asymmetries in shape.

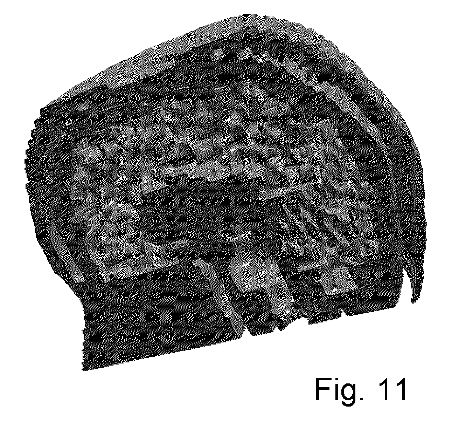

The modeled head-structure data are a collection of a series of cross-sectional images, but in step 808, these data are sequentially superimposed on each other before undergoing a heretofore known smoothing process or interpolation process, and are converted to three-dimensional data in which each structure also extends in the axial direction. As a result of this step, each structure gains continuity in the axial direction as well, and each structure is reconfigured as data having a three-dimensional spread. In a preferred mode, for the smoothing process, a procedure in which, for example, the number of points presenting the surface of each compartment is reduced by a factor of 10 may be used. After this step, it becomes possible to form not only cross-sectional images from the head model data but also sagittal views or coronal views. Fig. 11 shows an example of a sagittal view formed from data formed from this step.

In step 810, the cross-sectional data formed in the previous step are deformed and merged with image data having the same external appearance of a head as a human. With the above steps, three-dimensional CAD data having the necessary head shape and head structures are completed. In step 812, by inputting these three-dimensional CAD data into a heretofore known stereolithography machine, a desired head model is obtained through a heretofore known stereolithography process.

Stereolithography is a procedure that allows for a three-dimensional structure to be molded as a single body with no cuts by irradiating light on a liquid photo-curable resin in accordance with CAD data. As in the head model described above, even in cases in which it is necessary to form a hollow structure inside the solid structure, it is possible to mold the structure as a single body without using a procedure of secondary bonding, such as bonding or anastomosis. The fact that procedures such as bonding or anastomosis are not required prevents situations in which air is remained on joint surfaces, which results in decreasing in data quality during measurement. So this fact has the advantage of enabling the formation of high-quality images. Consequently, stereolithography may be said to be a very excellent procedure for forming the head model according to the present invention.

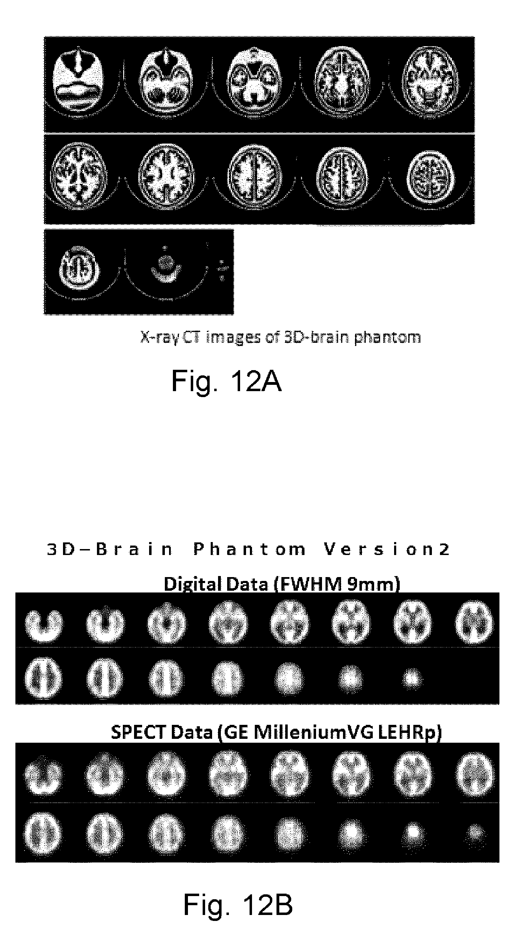

Fig. 12 shows the results of imaging the head model 300 described above using CT and SPECT. Fig. 12A is a CT image, and Fig. 12B is a SPECT image. As shown in these images, by using the head model according to the present invention, it is possible to obtain a very good image that reproduces the head well.

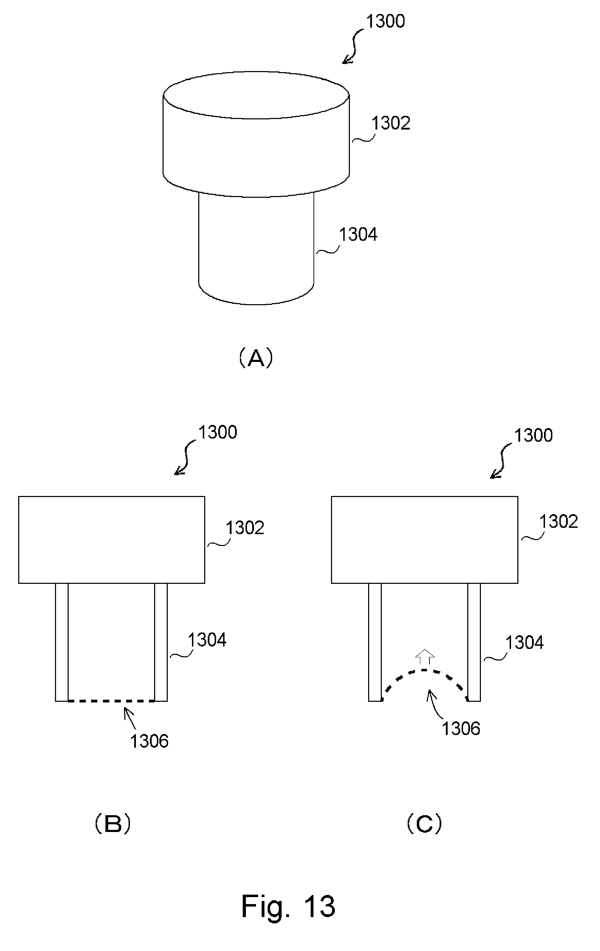

Fig. 13 is an illustration for explaining a preferred example of a spigot 1300 that may be used to seal a liquid-injection hole of a cavity resembling the skull or a brain region in the head model according to the present invention. In Fig. 13, (A) shows a perspective view, and (B) shows a cross-sectional view. The spigot 1300 has a grip part 1302 and a tube part 1304 for insertion into the liquid-injection hole. The tube part 1304 is formed with a shape and dimensions that completely fit with the inner surface of the liquid-injection hole to completely seal the liquid-injection hole. Depending on the embodiment, on the surface of the tube part 1304, a screw thread that screws into a spiral groove engraved into the inner surface of the liquid-injection hole may be formed.

Regarding the characteristics of the spigot 1300, the tube part 1304 is hollow as shown in the cross-sectional views (B) and (C), and the opening thereof is covered by an elastic membrane 1306 formed by rubber, etc. The hollow part does not need to completely run through the tube part 1304, but may do so. Moreover, depending on the embodiment, a hollow part may be formed in the grip part 1302 as well, and depending on the embodiment, this hollow part may run through the grip part 1302 as well and form an opening above the grip part 1302. The important feature is that the surface of the basilar part of the tube part 1304 that faces the inside of the cavity is formed by the elastic membrane 1306.

When the spigot 1300 is inserted into the liquid-injection hole of the cavity of the head model, the liquid filled into the cavity faces pressure proportionate to the inserted volume of the tube part 1304. This pressure may prevent the insertion of the tube part 1304 or cause damage to the head model. However, as shown in (C), the spigot 1300 is configured so that the elastic membrane 1306 is deformed by pressure and can swell toward the interior of the hollow tube 1304. As a result of this deformation of the elastic membrane 1306, it is possible to release the pressure applied on the liquid, and it is therefore possible to smoothly insert the tube part 1304 into the cavity and prevent damage to the head model caused by liquid pressure.

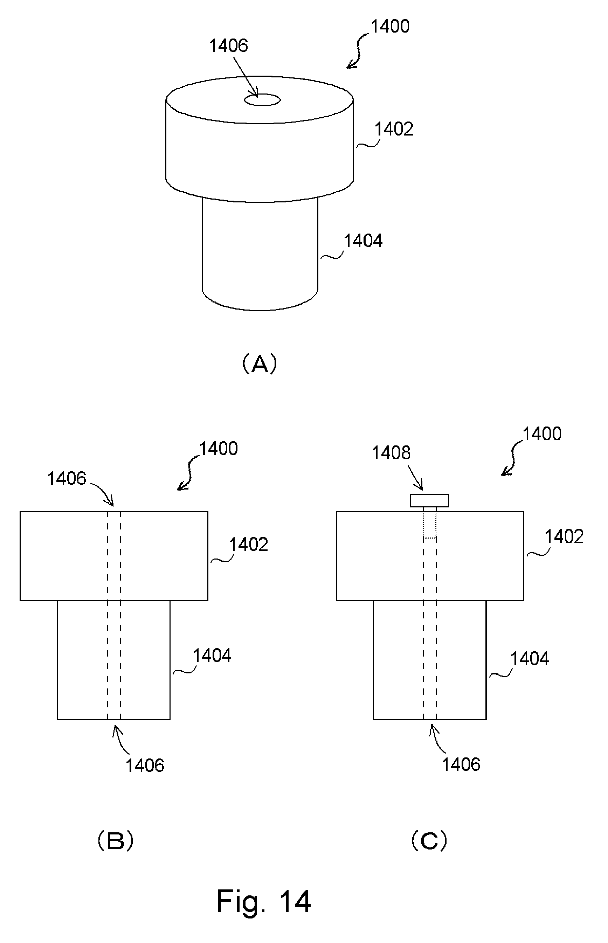

Fig. 14 is an illustration for explaining another example of a spigot that may be used to seal a liquid-inj ection hole of a cavity resembling the skull or a brain region in a head model. In Fig. 14, (A) shows a perspective view of a spigot 1400 according to the present embodiment, and (B) and (C) show cross-sectional views. As with the spigot 1300 according to the previous embodiment, the spigot 1400 also has a grip part 1402 and a tube part 1404 for insertion into the liquid-injection hole. As in the previous embodiment, the tube part 1404 is formed with a shape and dimensions that completely fit with the inner surface of the liquid-injection hole to completely seal the liquid-injection hole. Depending on the embodiment, on the surface of the tube part 1404, a screw thread that screws into a spiral groove engraved into the inner surface of the liquid-injection hole may be formed

The spigot 1400 has a through-hole 1406 that passes through the grip part 1402 and the tube part 1404 and opens at the top and bottom.

When the spigot 1400 is inserted into the liquid-injection hole of the cavity of the head model, the liquid filled into the cavity faces pressure proportionate to the volume of the tube part 1404. However, in the spigot 1400, because of the presence of the through-hole 1406, the liquid being pressed by the pressure may be discharged outside through the through-hole 1406. For this reason, it is possible to insert the tube part 1404 into the cavity without being obstructed by liquid pressure, and it is also possible to prevent damage to the head model caused by liquid pressure. After completely engaging the spigot 1400 in the liquid-injection hole, by sealing the top opening of the through-hole 1406 with a small spigot 1408, which is possible to completely seal the cavity.

Because the only purpose of the through-hole 1406 is to allow liquid pressed by pressure to escape, a narrow hole is sufficient, and narrowness is preferable for the purpose of sealing. When inserting the spigot 1408 into the hole 1406, the liquid naturally faces pressure proportionate to the seal tube of the spigot 1408. But by making the hole 1406 sufficiently narrow and designing the seal tube of the spigot 1408 with a small diameter, the pressure applied during insertion can be minimized, and consequently, it is possible to prevent the application of pressure that may cause damage to the head model.

Furthermore, although the spigot 1300 shown in Fig. 13 and the spigot 1400 shown in Fig. 14 may each be used individually, their combined use provides more excellent advantages and is therefore preferable. For example, two openings are provided as liquid-injection holes, and the spigot 1300 is used for one and the spigot 1400 is used for the other. Then, after the injection of liquid into the brain model, the spigot 1300 is used to spigot the hole, and next, the spigot 1400 with the open through-hole 1406 is used for the other spigot. At this time, because the increased pressure is released through the through-hole 1406, the head model does not face any load caused by increases in internal pressure. Subsequently, the spigot 1408 is inserted into the upper opening of the through-hole 1406 to completely spigot the head model. At this time, increases in internal pressure caused by the insertion of the spigot 1408 are released to the tube part 1304 via the elastic membrane provided on the basilar part of the spigot 1300, and it becomes possible to prevent the head model from facing any load caused by increases in internal pressure.

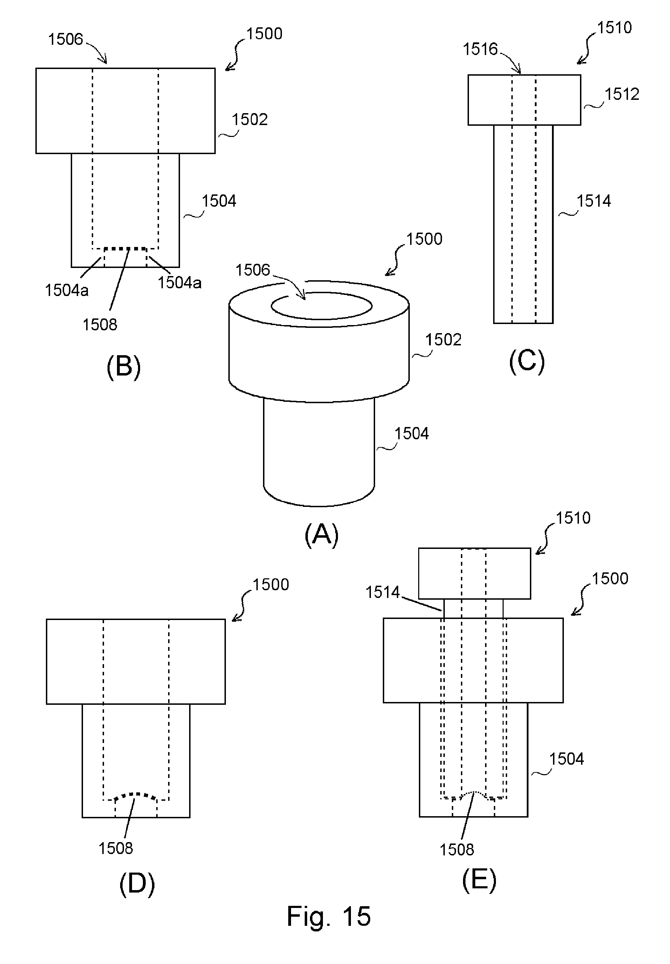

Using Fig. 15, yet another example of a spigot that may be used to seal a liquid-injection hole of a cavity resembling the skull or a brain region in a head model will be explained. The external appearance of a spigot 1500 according to the present embodiment closely resembles that of the spigot 1400 of the previously described example, and as shown in the perspective view of Fig. 15A and the cross-sectional view of Fig. 15B, this spigot has a columnar grip part 1502 and tube part 1504, as well as a through-hole 1506 that passes through these. However, unlike the spigot 1400, the spigot 1500 is structured so that the inner wall of the tube part 1504 in the lower end of the through-hole 1506 is projected interiorly, and the diameter of the through-hole 1506 becomes narrower toward the lower end due to this projected part 1504a. Moreover, on the upper end of the projected part 1504a, an elastic membrane 1508 similar to the elastic membrane 1306 of the spigot 1300 of the previously described example is provided. And the elastic membrane 1306 closes the opening. In other words, the elastic membrane 1508 is provided between the upper opening and lower opening of the through-hole 1506. Consequently, after the elastic membrane 1508 is provided, it is not possible to pass through between the upper and lower openings of the through-hole 1506.

The through-hole 1506 is fitted with another spigot 1510 like the one shown in Fig. 15C. As with the spigot 1400 of the previous example, the spigot 1510 is also a spigot that has a columnar grip part 1512 and tube part 1514, as well as a through-hole 1516 that passes through these. Of course, the diameter of the tube part 1514 must be set to a diameter that can fit with the through-hole 1506 of the spigot 1500.

When the spigot 1500 is inserted into a liquid-injection hole of a cavity of a head model, as with the spigot 1300 of the previously described example, pressure is applied to the elastic membrane 1508 due to the volume of the inserted tube part 1504, and the elastic membrane 1508 deforms by swelling outwardly (Fig. 15D). When the spigot 1510 is inserted from the upper opening of the through-hole 1506, the lower end of the tube part 1514 of the spigot 1510 comes into contact with the projected part 1504a of the tube part 1504 of the spigot 1500, and as a result, the deepest position of the spigot 1510 is determined. At this time, because the lower end of the tube part 1514 of the spigot 1510 presses against the elastic membrane 1508, it is possible to apply pressure to the elastic membrane 1508 from the outward side and thus counter the pressure from inside the cavity, and therefore, the cavity can be sealed more completely. Because the through-hole 1516 is provided on the spigot 1510, the elastic membrane 1508 can deform toward the interior of that through-hole, and this prevents the elastic membrane 1508 from being destroyed by the pressure (refer to Fig. 15E). Consequently, according to the example of the spigot of Fig. 15, it becomes possible to more completely seal the cavity of the head model.

Preferred embodiments of the present invention have been described in detail above. But it should be understood that these descriptions and drawings have been presented not with the intent of limiting the scope of the present invention, but in order to contribute to understanding of the present invention. Several of the preferred embodiments of the present invention are identified in the following Claims. But the embodiments of the present invention are not limited to those explicitly described in the Claims, Description, or the Drawings, and can take various modes without deviating from the spirit of the present invention. The present invention includes within its scope all new and beneficial configurations that may be derived from these documents, regardless of whether they have been explicitly disclosed in the Claims, Description, or the Drawings of the present application.

### [Explanation of Symbols]

300: Head model
302: Structure
304: Cavity
304a: Opening
306: Cavity
306a: Opening
422: Cavity
424: Cavity
1300: Spigot
1302: Grip part
1304: Tube part
1306: Elastic membrane
1400: Spigot
1402: Grip part
1404: Tube part
1406: Through-hole
1408: Small spigot

## Claims

1. A head model that may be provided for use in verification for brain imaging, where
a part corresponding to the skull and a part corresponding to at least one specific region of the brain are each formed by a continuous cavity with no cuts other than an opening for liquid injection, and at least part of the structure surrounding said cavity is composed of a material having a linear absorption coefficient equivalent to that of human soft tissue.

2. The head model according to Claim 1, where said head model is formed as a single body through stereolithography.

3. The head model according to Claim 1 or 2, where the cavity of said part corresponding to the skull resembles the shape of a part that contains at least the cerebrum and the cerebellum.

4. The head model of any one of Claims 1 to 3, where said specific region of brain is selected from gray matter, white matter, cerebral neocortex, cerebral paleocortex, cerebrum, midbrain, cerebellum, diencephalon, nucleus basalis, hippocampus, cingulate gyrus, frontal lobe, parietal lobe, temporal lobe, occipital lobe, or an arbitrary region in a brain atlas.

5. The head model according to any one of Claims 1 to 4, where a columnar or reticular structure is formed in at least one part of said cavity forming the part corresponding to said specific region of the brain.

6. The head model according to any one of Claims 1 to 5, where said cavity forming said part corresponding to the skull and said cavity forming said part corresponding to at least one specific region of the brain are filled with liquid.

7. The head model of any one of Claims 1 to 6, where the external form of said head model resembles the external form of a human head.

8. The head model of any one of Claims 1 to 7, where said head model is formed by a transparent or semitransparent material.

9. A head model that may be provided for use in verification for brain imaging, comprising:
a first-part for containing liquid that is provided on a part corresponding to the skull, and has a hollow structure with no discontinuous parts other than an opening for liquid injection;
a second-part for containing liquid that is provided on a part corresponding to a specific region of the brain, and has a continuous hollow structure with no cuts other than an opening for liquid injection; and
a structure that is formed as a single body so that said first and second-part for containing liquids are present therein, the structure formed by a material having a linear absorption coefficient equivalent to that of human soft tissue.

10. A method for producing a head model that may be provided for use in verification for brain imaging, where:
forming three-dimensional CAD data, based on a morphological image of a human head, that represent at least each of the skull and a specific region of the brain as a hollow structure with no discontinuous parts other than an opening for liquid injection, and
hardening a photo-curable resin through stereolithography based on the formed three-dimensional CAD data.

11. Three-dimensional CAD data that, by being input into a stereolithography machine, enable the stereolithography machine to mold a head model that may be provided for use in verification for brain imaging, where said three-dimensional CAD data represent, in said head model, a part corresponding to the skull and a part corresponding to at least one specific region of the brain, respectively, as hollow structures with no discontinuous parts other than an opening for liquid injection.

12. A spigot for sealing, in the head model according to any of Claims 1 to 8, the opening for injecting liquid into the cavity of said part corresponding to the skull and/or the opening for injecting liquid into the cavity of said part corresponding to a specific region of the brain, the spigot having a tube part that is to be inserted into said opening, where said tube part is hollow and also its opening is covered by an elastic membrane.

13. A spigot for sealing, in the head model according to any of Claims 1 to 8, the opening for injecting liquid into the cavity of said part corresponding to the skull and/or the opening for injecting liquid into the cavity of said part corresponding to a specific region of the brain, the spigot having a tube part that is to be inserted into said opening, where said tube part has in its center a through-hole extending in the axial direction and also comprises a second spigot for closing said through-hole from outside while said seal tube is inserted through said opening.
